**Europäisches Patentamt**

**European Patent Office**

**Office européen des brevets**

(11) Veröffentlichungsnummer: **0 038 026**
**B1**

(12) # EUROPÄISCHE PATENTSCHRIFT

(45) Veröffentlichungstag der Patentschrift:
**21.12.83**

(51) Int. Cl.³: **G 03 B 17/24,** G 03 B 19/18

(21) Anmeldenummer: **81102680.6**

(22) Anmeldetag: **09.04.81**

(54) **Kinematografische Kamera mit einem Markierungsgenerator.**

(30) Priorität: **12.04.80 DE 3014099**

(43) Veröffentlichungstag der Anmeldung:
**21.10.81 Patentblatt 81/42**

(45) Bekanntmachung des Hinweises auf die Patenterteilung:
**21.12.83 Patentblatt 83/51**

(84) Benannte Vertragsstaaten:
**AT FR GB**

(56) Entgegenhaltungen:
**DE - A - 2 335 500**
**DE - A - 2 350 738**
**DE - A - 2 604 067**
**DE - A - 2 846 919**
**DE - B - 2 147 073**
**DE - B - 2 644 262**

(73) Patentinhaber: **AGFA-GEVAERT Aktiengesellschaft,
D-5090 Leverkusen 1 (DE)**

(72) Erfinder: **Stumpf, Friedrich, Untersbergstrasse 84,
D-8000 München 90 (DE)**
Erfinder: **Scheller, Thomas, Paulsdorfferstrasse 10,
D-8000 München 90 (DE)**

BUNDESDRUCKEREI BERLIN

Kinematografische Kamera mit einem Markierungsgenerator

Die Erfindung betrifft eine kinematografische Kamera mit einem mit einer Batterie verbindbaren Gleichstrommotor, durch den ein Umlaufverschluß antreibbar ist und mit einem Generator zur Erzeugung von Markierungssignalen, durch die ein in der Kamera befindlicher Aufzeichnungsträger zur Kennzeichnung von einzelnen Szenen und/oder von Einzelbildern markierbar ist.

Der Erfindung liegt die Aufgabe zugrunde, eine kinematografische Kamera der eingangs genannten Art zu schaffen, in der in einfacher und sicherer Weise mit möglichst wenigen Mitteln eine Markierung des Aufzeichnungsträgers erfolgen soll. Insbesondere soll die elektrische Leistung der Markierungssignale im wesentlichen unabhängig von der Kapazität der verwendeten Batterie sein.

Gemäß der Erfindung wird dies dadurch erreicht, daß vor dem Einschalten des Gleichstrommotors ein Ladekondensator mittels eines durch eine Handhabe betätigbaren Schalters von der Batterie abschaltbar und direkt in Serie mit einer Leuchtdiode verbindbar ist und daß parallel zur Leuchtdiode ein Widerstand geschaltet ist, dessen Widerstandswert groß ist gegenüber dem Leuchtdioden-Widerstand bei überschrittenem Schwellwert und klein ist gegenüber dem Leuchtdioden-Widerstand bei unterschrittenem Schwellwert. Hierdurch ergibt sich der Vorteil, daß der Ladekondensator im sonst unbelasteten Zustand der Batterie aufgeladen wird. Zwischen zwei Einzelbildaufnahmen hat so der Ladekondensator genügend Zeit, um auf die volle Batteriespannung aufgeladen zu werden. Dies ist auch dann noch möglich, wenn Batterie nicht mehr ihre volle Kapazität aufweist (größer werdender Innenwiderstand). Hierdurch ergibt sich außerdem eine schonende Behandlung der Batterie, da die Aufladung des Ladekondensators und die Bestromung der Leuchtdiode zeitlich voneinander unabhängig sind.

Des weiteren wird ein Nachleuchten der Leuchtdiode dadurch vermieden, daß parallel zu ihr der Widerstand vorgesehen ist, der ein rasches Unterschreiten des Schwellwertes der Leuchtdiode ermöglicht. Ohne diesen Widerstand würde sich der Ladekondensator nur sehr langsam entladen können, da der Leuchtdiodenwiderstand bei unterschrittenem Schwellwert hochohmig ist. Ohne Parallelwiderstand wäre die Gefahr gegeben, daß das einem Einzelbild folgende Filmbild einer Bewegungsszene ebenfalls eine Lichtmarkierung erhalten würde.

Gemäß weiterer Ausbildung sind die Ladespannung der Batterie und die Kapazität des Ladekondensators so auf die Kennwerte der Leuchtdiode abgestimmt, daß die während der Entladungszeit des Ladekondensators der Leuchtdiode zugeführte elektrische Energie auch nach einer Serie von Einzelbildern die Leuchtdiode thermisch nicht überlastet.

In vorteilhafter Weise liegen die Ladespannung der Batterie im Bereich von 2 bis 4 Volt, die Kapazität des Ladekondensators im Bereich von 50 bis 150 μ Farad und der Parallelwiderstand im Bereich von 10 bis 30 Ohm.

Zweckmäßigerweise ist die Leuchtdiode gegenüber der Bildfenstermitte entgegen der Filmtransportrichtung um drei Bildfensterbreiten versetzt angeordnet.

Gemäß weiterer Ausgestaltung ist die Handhabe für den Umschalter gleichzeitig die Auslösehandhabe für den Motorstromkreis. Hierdurch ergibt sich der Vorteil, daß bei betätigter Handhabe die Batterie nur durch den Motor belastet ist, während der Kondensator erst nach Freigabe der Handhabe mit der Batterie verbunden wird.

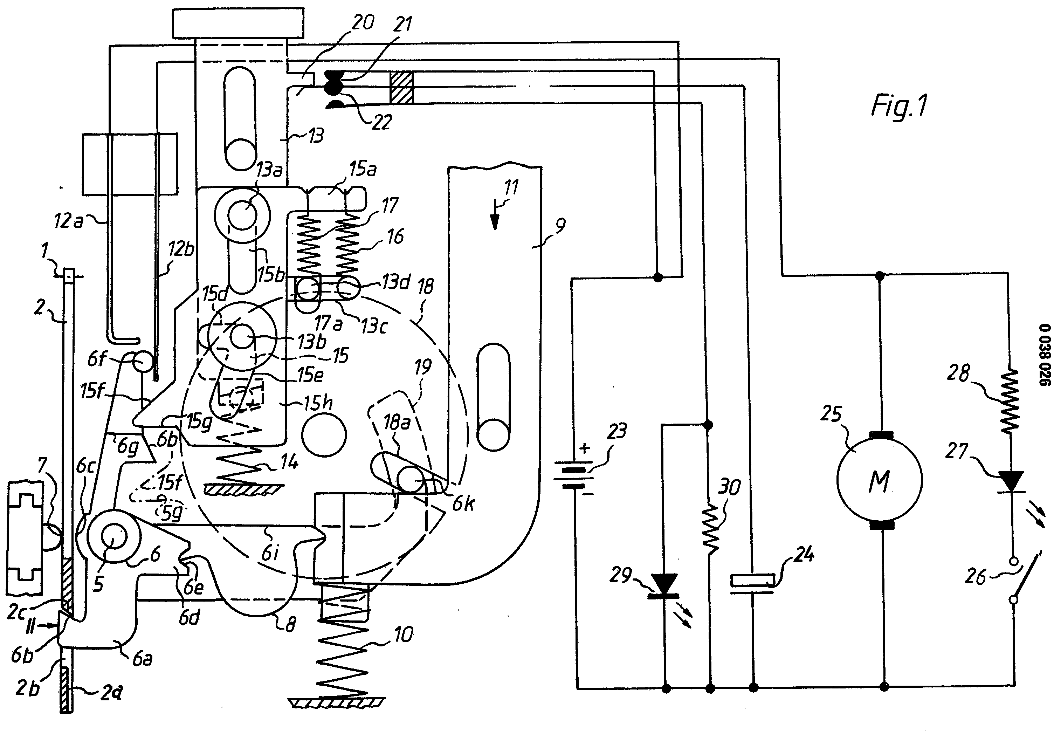

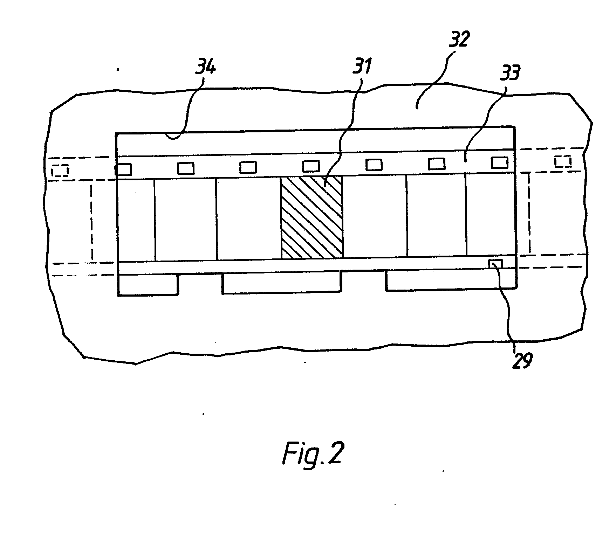

Im folgenden wird die Erfindung anhand eines in den Fig. 1 und 2 dargestellten Ausführungsbeispieles beschrieben. Es zeigt

Fig. 1 in schematischer Darstellung die Lichtmarkierungseinrichtung und

Fig. 2 den kameraseitigen Bereich der Bildbühne bei eingelegter Filmkassette vom Objekt her gesehen.

In Fig. 1 sind ein um eine Achse 1 drehbarer Umlaufverschluß einer Schmalfilmkamera mit 2, seine Belichtungsöffnung mit 2a, seine an deren Rand vorgesehene Sperrausnehmung mit 2b, deren Sperrkante mit 2c, eine in Ablaufrichtung gemäß Pfeilrichtung 3 vor der Sperrausnehmung 2b liegende, dem Auslösemechanismus zugewandte Vertiefung mit 2d und das kameraseitige Bildfenster mit 4 bezeichnet.

Auf einer zur Ebene des Umlaufverschlusses parallelen Achse 5 ist ein Auslöse- und Sperrhebel 6 schwenkbar gelagert. Ein Arm 6a des Auslöse- und Sperrhebels 6 ist gegen den Umlaufverschluß 2 abgewinkelt und trägt eine schräge Sperrfläche 6b, die gegen Ende eines Verschlußablaufs in die Vertiefung 2b bremsend einfällt und dann durch die Sperrausnehmung 2b durchfällt und an der Sperrkante 2c den Verschluß 2 in definierter Lage anhält, in der das Bildfenster 4 abgedeckt ist. Die Kante 2c und die Sperrkante 6b des Armes 6a sind in gleicher Weise entgegen der Umlaufrichtung 3 abgeschrägt, so daß die Sperrkante 2c eine Hinterschneidung gegenüber dem Arm 6a bildet, in die dieser eingreift. Hierdurch wird erreicht, daß der Arm 6a unter dem Aufprall der Sperrkante 2c nicht aus der Ausnehmung 2b herausgeworfen werden kann.

Am Auslöse- und Sperrhebel 6 ist außerdem ein gegen den Umlaufverschluß 2 gerichteter Stützwulst 6c vorgesehen, wobei auf der anderen Seite des Umlaufverschlusses 2 ein weiterer Stützwulst 7 angeordnet ist und der Umlaufverschluß 2 durch die beiden Wülste 6c, 7 eine Führung erhält.

Der Auslöse- und Sperrhebel 6 weist einen um etwa 90° gegenüber dem Arm 6a versetzten Arm 6b mit einer Kerbe 6e zum Einhängen eines Schenkels einer Kippfeder auf. Das andere Ende der Kippfeder 8 ist an einem Auslöseschieber 9 für die Laufbildauslösung eingehängt. Der Laufbildauslöser steht unter der Wirkung einer Rückstellfeder 10 und ist parallel zur Ebene des Umlaufverschlusses 2 verschiebbar in Richtung des Pfeiles 11. Wird der Laufbildauslöser in Richtung des Pfeiles 11 betätigt, so bewirkt die Kippfeder 8 eine Schwenkung des Auslöse- und Sperrhebels 6 entgegen dem Uhrzeigersinn, wodurch die Sperrkante 6b den Umlaufverschluß freigibt. Gleichzeitig gibt ein weiterer Arm 6f den Motorschalter 12a, 12b zum Schließen frei, so daß der Kameramotor in bekannter und deshalb nicht gezeigter Weise den Umlaufverschluß und Filmtransportgreifer antreibt. Beim Loslassen des Laufbildauslösers 9 wird dieser in die in Fig. 1 gezeigte Stellung durch seine Rückstellfeder 10 zurückbewegt, wobei der Auslöse- und Sperrhebel 6 unter der Wirkung der Kippfeder 8 im Uhrzeigersinn in seine Sperrstellung zurückgekippt wird und dabei zunächst in der Vertiefung 2d auf dem Umlaufverschluß 2 schleift und dann in die Sperrausnehmung 2b einfällt und den Umlaufverschluß stillsetzt und hierbei auch den Motorschalter 12a, 12b öffnet.

Für die Auslösung von Einzelbildern ist ein vom Laufbildauslöser 9 getrennter, parallel zu diesem verschiebbarer Schieber 13 mit zwei Führungsstiften 13a, 13b und einem Lappen 13c vorgesehen, der unter der Wirkung der weiteren Rückstellfeder 14 steht. Mit dem Einzelbildauslöseschieber 13 ist ein Schleuderhebel 15 drehbar und verschiebbar durch Federn 16 und 17 verspannt, die einerseits am Lappen 13c und andererseits an einem Lappen 15a eingehängt sind. Die Feder 16 ist eine reine Rückstellfeder. Die Feder 17 dagegen ist eine Antriebsfeder für die Auslösebewegung und umgreift daher mit einer länglichen Öse 17a einen Stift 13d des Lappens 13c. Der Schleuderhebel 15 umgreift mit einem geraden Schlitz 15b den Stift 13a und mit einem Schlitz 15c den Stift 13b, der einen senkrecht zur Bewegungsrichtung des Schiebers 13 verlaufenden Ast 15d und einen schräg hierzu verlaufenden Ast 15e aufweist.

Eine Nase 15f des Schleuderhebels 15 weist eine senkrecht zur Bewegungsrichtung des Schiebers 13 verlaufende Spannfläche 15g auf, der eine in der Sperrstellung des Auslöse- und Sperrhebels 6 zu ihr parallele Fläche 6g zugeordnet ist, an die sich eine Schrägfläche 6h anschließt. Ein weiterer Arm 6i greift mit einem Stift 6k in einen Schlitz 18a einer Schwungscheibe 18 ein. Die Bewegung von Auslöse- und Sperrhebel 6 und Schwungscheibe 18 ist durch einen gehäusefesten Schlitz 19 begrenzt.

Der Auslöseschieber 13 weist einen Ansatz 20 auf, durch den ein Umschalter 21, 22 betätigbar ist. Über den Kontakt 21 ist eine Batterie 23 mit einem Ladekondensator 24 verbunden, der eine Kapazität von 100 μ Farad aufweist. Der Gleich-strommotor ist mit 25 bezeichnet, dem mittels eines Schalters 26 eine Leuchtdiode 27 sowie ein Reihenwiderstand 28 parallel-schaltbar sind.

Über den Kontakt 22 des Umschalters 21, 22 ist der Ladekondensator 24 parallel zu einer Markierungsleuchtdiode 29 schaltbar, der ein Widerstand 30 parallel-geschaltet ist. Der Widerstand 30 weist einen Wert von 22 Ohm auf. Die Nennspannung der Batterie 23 beträgt 3 Volt.

In Fig. 2 ist die Markierungsleuchtdiode 29 und die Breite von drei Bildern gegenüber dem Bildfenster 31 versetzt angeordnet. Mit 32 ist ein Teil der Filmkassette und mit 33 der Film bezeichnet. Mit 34 ist die filmkassettenseitige Öffnung bezeichnet. Fig. 2 zeigt, daß die Markierungsdiode 29 gegenüber der Mitte des Bildfensters 31 die größtmögliche Entfernung aufweist, die durch die Querkante der Filmkassettenöffnung begrenzt ist. Die Versetzung der Markierungsdiode ermöglicht in einem nicht dargestellten Wiedergabegerät eine streulichtfreie Abtastung der Markierung.

Bei der Durchführung einer Einzelbildaufnahme wird der Einzelbildauslöseschieber 13 in Richtung des Pfeiles 11 bewegt. Hierbei wird der Kontakt 21 geöffnet, über den zuvor der Ladekondensator 24 durch die Batterie 23 aufgeladen worden ist. Darauffolgend wird der Kontakt 22 geschlossen und der Ladekondensator 24 mit der Leuchtdiode 29 verbunden. Hierbei erzeugt während der Entladungsphase des Kondensators 24 die Leuchtdiode 29 einen Lichtblitz, der auf dem Film 33 einen Lichtfleck hervorruft. Innerhalb kurzer Zeit hat die Spannung des Kondensators 24 die Schwellwertspannung der Leuchtdiode 29 unterschritten, da nach dem Erreichen des Schwellwertes der Leuchtdiode 29 die weitere Entladung des Kondensators 24 über den Widerstand 30 erfolgt. Hierdurch ist eine sichere Unterschreitung des Schwellwertes der Leuchtdiode 29 gewährleistet. Ein Nachleuchten der Leuchtdiode 29 ist verhindert, ohne daß die Lichtleistung bzw. die Energieabgabe des Kondensators nennenswert beeinträchtigt wird.

Bei der weiteren Betätigung des Einzelbildauslöseschiebers 13 trifft die Spannfläche 15g auf die Fläche 6g, so daß zunächst die Federn 17 und 16 gespannt werden. Der Stift 13b gleitet hierbei in den schrägen Ast 15e des Schlitzes 15c, so daß nach einem vorbestimmten Bewegungsweg des Schiebers 13 die Nase 15f von der Fläche 6g abgleitet. Die gespannte Antriebsfeder 17 entspannt sich schlagartig, wodurch sich der Schleuderhebel 15 in Richtung des Pfeiles 11 verschiebt und im Uhrzeigersinn dreht und hierbei auf die Fläche 6h trifft und den Auslöse- und Sperrhebel 6 entgegen dem Uhrzeigersinn schleudert. Hierdurch werden die Schalter 12a und 12b geschlossen und der Stromkreis für den Motor 25 geschlossen. Demzufolge wird der Umlaufverschluß 2 freigegeben. Die Bewegung des Auslöse- und Sperrhebels 6 wird durch die Schwungscheibe 18 etwas verzögert, so daß sichergestellt ist, daß die Sperrkante 6b erst wieder auf den Umlaufverschluß 2 trifft, wenn die Ausnehmung 2b schon aus deren Bereich weggedreht worden ist.

Nach der Durchführung der Schleuderbewegung gelangt der Stift 13b in den oberen Teil des Schlitzes 15c. Die Nase 15f reißt von der Fläche 6h ab. Die Nase 15f nimmt die strichpunktiert gezeichnete Stellung ein, in der der Auslöse- und Sperrhebel 6 unter der Wirkung der Kippfeder 8 wieder an dem Umlaufverschluß 2 anliegt und nach einer Umdrehung desselben in die Vertiefung 2d und dann in die Ausnehmung 2b einfällt und den Verschluß stillsetzt. Wird nun der Einzelbildauslöseschieber 13 freigegeben, so kehrt er unter der Wirkung seiner Feder 14 in seine gezeigte Ausgangsstellung zurück. Durch die Wirkung der Rückstellfeder 16 folgt der Schleuderhebel 15 dieser Bewegung nach, wobei er um die Fläche 6h unter der Wirkung der Schräge der Nase 15f unter des Schlitzes 15c herumgesteuert wird. Die Antriebsfeder 17 wird hierbei infolge der länglichen Öse 17a nicht gespannt. Des weiteren wird der Kontakt 21 wieder geschlossen und die Batterie 23 mit dem Kondensator 24 verbunden. Auch sind die Schaltarme 12a und 12b unterbrochen.

**Patentansprüche**

1. Kinematografische Kamera mit einem mit einer Batterie verbindbaren Gleichstrommotor, durch den ein Umlaufverschluß antreibbar ist und mit einem Generator zur Erzeugung von Markierungssignalen, durch die ein in der Kamera befindlicher Aufzeichnungsträger zur Kennzeichnung von einzelnen Szenen und/oder von Einzelbildern markierbar ist, dadurch gekennzeichnet, daß vor dem Einschalten des Gleichstrommotors (25) ein Ladekondensator (24) mittels eines durch eine Handhabe (13) betätigbaren Schalters (21, 22) von der Batterie (23) abschaltbar und direkt in Serie mit einer Leuchtdiode (29) schaltbar ist und daß parallel zur Leuchtdiode (29) ein Widerstand (30) geschaltet ist, dessen Widerstandswert groß ist gegenüber dem Leuchtdioden-Widerstand bei überschrittenem Schwellwert und klein ist gegenüber dem Leuchtdioden-Widerstand bei unterschrittenem Schwellwert.

2. Kinematografische Kamera nach Anspruch 1, dadurch gekennzeichnet, daß die Ladespannung der Batterie (23) und die Kapazität des Ladekondensators (24) so auf die Kennwerte der Leuchtdiode (29) abgestimmt sind, daß die während der Entladezeit des Ladekondensators der Leuchtdiode zugeführte elektrische Energie auch nach einer Serie von Einzelbildern die Leuchtdiode thermisch nicht überlastet.

3. Kinematografische Kamera nach Anspruch 2, dadurch gekennzeichnet, daß die Ladespannung der Batterie im Bereich von 2 bis 4 Volt, die Kapazität des Ladekondensators im Bereich von 50 bis 150 μ Farad und der Parallelwiderstand im Bereich von 10 bis 30 Ohm liegen.

4. Kinematografische Kamera nach einem der vorhergehenden Ansprüche, dadurch gekennzeichnet, daß die Leuchtdiode (29) gegenüber der Bildfenstermitte entgegen der Filmtransportrichtung um drei Bildfensterbreiten (31) versetzt angeordnet ist.

5. Kinematografische Kamera nach einem der vorhergehenden Ansprüche, dadurch gekennzeichnet, daß die Handhabe (13) für den Umschalter (21, 22) gleichzeitig die Auslösehandhabe für den Motorstromkreis ist.

**Claims**

1. A cinematographic camera comprising a d. c. motor which is connected to a battery and by which a rotary shutter is driven, and a generator for producing marking signals by which a recording support disposed in the camera may be marked for distinguishing individual scenes and/or individual frames, characterized in that before switching on the d. c. motor (25) a charging condensor (24) is disconnectible from the battery (23) by means of a switch (21, 22) actuable by a handle (13) and is connectible directly in series with a light-emitting diode (29), and in parallel with the light-emitting diode (29) there is connected a resistor (30), the resistance value of which is greater than the resistance of the light-emitting diode (29) when the threshold value is exceeded and smaller than the resistance of the light-emitting diode (29) when the threshold value is not reached.

2. A cinematographic camera according to Claim 1, characterized in that the charging voltage of the battery (23) and the capacitance of the charging condensor (24) are co-ordinated with the characteristics of the light-emitting diode (29) in such a way that the electrical energy supplied to the light-emitting diode during the discharge period of the charging condenser does not thermally overload the light-emitting diode even after a series of individual frames.

3. A cinematographic camera according to Claim 2, characterized in that the charging voltage of the battery is in the range of from 2 to 4 volts, the capacitance of the charging condensor is in the range of from 50 to 150 μF, and the parallel resistance lies in the range of from 10 to 30 ohms.

4. A cinematograph camera according to any one of the preceding Claims, characterized in that the light-emitting diode (29) is offset by three picture gate widths (31) oppositely from the direction of movement of the film with respect to the picture gate centre.

5. A cinematograph camera according to any one of the preceding Claims, characterized in that the handle (13) for the change-over switch (21, 22) is at the same time the release handle for the motor circuit.

## Revendications

1. Caméra cinématographique comportant un moteur à courant continu pouvant être relié à une pile et au moyen duquel l'obturateur rotatif peut être entraîné, et un générateur servant à produire des signaux de marquage à l'aide desquels le support d'enregistrement situé dans la caméra peut être marqué de manière à caractériser des scènes individuelles et/ou des images individuelles, caractérisée par le fait qu'avant le branchement du moteur à courant continu (25), un condensateur de charge (24) peut être débranché de la pile (23) au moyen d'un commutateur (21, 22) pouvant être actionné par une manette (13) et peut être branché directement en série avec une diode luminescente (29), et qu'en parallèle avec la diode luminescente (29) est branchée une résistance (30) dont la valeur ohmique est élevée par rapport à la résistance de la diode luminescente, lors du dépassement par le haut d'une valeur de seuil, et est faible par rapport à la résistance de la diode lumirescente lors du dépassement par le bas d'une valeur de seuil.

2. Caméra cinématographique suivant la revendication 1, caractérisée par le fait que la tension de charge de la pile (23) et la capacité du condensateur de charge (24) sont accordées sur les valeurs caractéristiques de la diode luminescente (29) de telle sorte que l'énergie électrique envoyée à la diode luminescente pendant la durée de décharge du condensateur de charge, ne soumet pas à une contrainte thermique excessive la diode luminescente, même après une série d'images individuelles.

3. Caméra cinématographique suivant la revendication 2, caractérisée par le fait que la tension de charge de la pile se situe dans la plage de 2 à 4 volts, la capacité du condensateur de charge se situe dans la plage de 5 à 150 microfarads et la valeur de la résistance en parallèle se situe dans la plage de 10 à 30 ohms.

4. Caméra cinématographique suivant l'une des revendications précédentes, caractérisée par le fait que la diode luminescente (29) est disposée en étant décalée de trois largeurs de la fenêtre de cadrage (31), par rapport au centre de cette fenêtre en sens opposé au sens d'entraînement du film.

5. Caméra cinématographique suivant l'une des revendications précédentes, caractérisée par le fait que la manette (13) de l'interrupteur (21, 22) est simultanément la manette de déclenchement du circuit du moteur.

*Fig.1*

0 038 026

Fig.2